# EUROPEAN PATENT APPLICATION

(11) **EP 4 488 729 A1**
(43) Date of publication of application: **08.01.2025**
(21) Application number: 23759534.3
(22) Date of filing: 19.01.2023
(51) Int. Cl.: G02B 5/32, B32B 7/023, G02B 5/02

(54) **MULTILAYER FILM**

(30) Priority: 28.02.2022 JP 2022029194
(71) Applicant: Nitto Denko Corporation, Ibaraki-shi, Osaka 567-8680 (JP)
(72) Inventor: MORISHIMA Ryota, Ibaraki-shi, Osaka 567-8680 (JP); HATTORI Daisuke, Ibaraki-shi, Osaka 567-8680 (JP)
(74) Representative: Hoffmann Eitle
(86) International application number: PCT/JP2023/001522
(87) International publication number: WO 2023/162528

(57) **Abstract**

There is provided a laminated film which includes an optical functional layer having a function of changing a direction of light and a pressure-sensitive adhesive layer for protecting the optical functional layer, and in which functional deterioration of the optical functional layer due to the pressure-sensitive adhesive layer is suppressed. A laminated film according to at least one embodiment of the present invention includes: an optical functional layer having a first main surface and a second main surface, the first main surface having an uneven structure and having a height of unevenness of from 10 nm to 100 um; a porous layer arranged on the first main surface of the optical functional layer; and a pressure-sensitive adhesive layer arranged on the porous layer on a side opposite to the optical functional layer, wherein the optical functional layer comprises a reflection-type hologram film, a microlens array film, or a prism film, and wherein the porous layer has a refractive index of from 1.15 to 1.30.

## Description

### Technical Field

The present invention relates to a laminated film.

### Background Art

A decorative film is used as means of improving the design properties of various products. Depending on applications, the decorative film includes an optical functional layer having a function of changing a direction of light (e.g., a hologram, a microlens array film, or a prism film) in some cases (see, for example, Patent Literatures 1 and 2). The optical functional layer having a function of changing a direction of light typically has an uneven structure on a surface thereof. When such optical functional layer is arranged on an outermost surface, the surface (substantially, the uneven structure) is damaged, and the function of the optical functional layer is reduced or disappears in some cases. Meanwhile, even when the surface (substantially, the uneven structure) of the optical functional layer is to be protected with, for example, a pressure-sensitive adhesive, the function of the optical functional layer is reduced or disappears due to the protected structure for the optical functional layer in some cases.

### Citation List

### Patent Literature

[PTL 1] JP 2020-028981 A
[PTL 2] JP 2020-104467 A

### Summary of Invention

### Technical Problem

The present invention has been made to solve the above-mentioned problems of the related art, and a primary object of the present invention is to provide a laminated film which includes an optical functional layer having a function of changing a direction of light and a pressure-sensitive adhesive layer for protecting the optical functional layer, and in which functional deterioration of the optical functional layer due to the pressure-sensitive adhesive layer is suppressed.

### Solution to Problem

A laminated film according to at least one embodiment of the present invention includes: an optical functional layer having a first main surface and a second main surface, the first main surface having an uneven structure and having a height of unevenness of from 10 nm to 100 um; a porous layer arranged on the first main surface of the optical functional layer; and a pressure-sensitive adhesive layer arranged on the porous layer on a side opposite to the optical functional layer, wherein the optical functional layer comprises a reflection-type hologram film, a microlens array film, or a prism film, and wherein the porous layer has a refractive index of from 1.15 to 1.30.

In one embodiment, the porous layer contains a silicon compound.

In one embodiment, the porous layer has a porosity of from 20 vol% to 60 vol%.

In one embodiment, the porous layer has a thickness of from 30 nm to 5 um.

In one embodiment, the porous layer is formed of one or a plurality of kinds of constituent units each forming a fine pore structure, and the constituent units are chemically bonded to each other through a catalytic action.

In one embodiment, the constituent unit of the porous layer is a constituent unit having at least one shape selected from the group consisting of: a particle shape; a fiber shape; a rod shape; and a flat plate shape.

In one embodiment, bonding between the constituent units of the porous layer includes a hydrogen bond or a covalent bond.

In one embodiment, the porous layer is directly formed on the first main surface of the optical functional layer.

### Advantageous Effects of Invention

According to the embodiment of the present invention, it is possible to achieve the laminated film which includes the optical functional layer having a function of changing a direction of light and the pressure-sensitive adhesive layer for protecting the optical functional layer, and in which functional deterioration of the optical functional layer due to the pressure-sensitive adhesive layer is suppressed.

### Brief Description of Drawings

FIG. **1** is a schematic sectional view of a laminated film according to one embodiment of the present invention.
FIG. **2** is a schematic sectional view of a laminated film according to another embodiment of the present invention.
FIG. **3** is a schematic sectional view of a laminated film according to still another embodiment of the present invention.
FIG. **4** is a schematic sectional view of a laminated film according to still another embodiment of the present invention.
FIG. **5** is a schematic sectional view of a laminated film according to still another embodiment of the present invention.

### Description of Embodiments

Embodiments of the present invention are described below. However, the present invention is not limited to these embodiments.

### A. Overall Configuration of Laminated Film

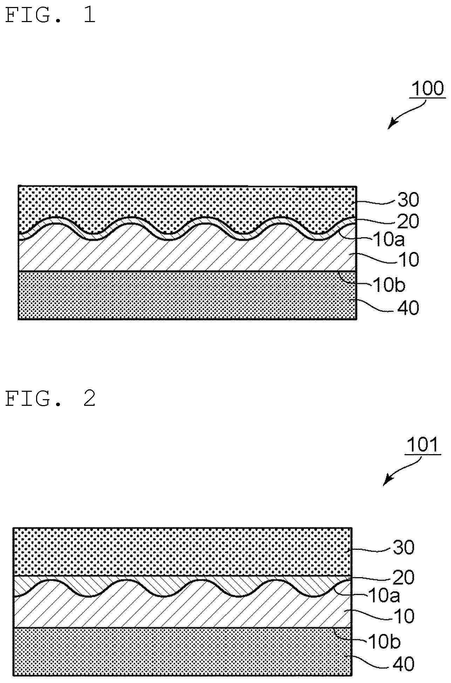

FIG. **1** is a schematic sectional view of a laminated film according to one embodiment of the present invention. A laminated film **100** of the illustrated example includes an optical functional layer **10,** a porous layer **20,** and a pressure-sensitive adhesive layer **30.** The optical functional layer **10** includes a first main surface **10a** and a second main surface **10b,** and the first main surface **10a** has an uneven structure. The porous layer **20** is arranged on the first main surface **10a** of the optical functional layer **10.** The pressure-sensitive adhesive layer **30** is arranged on the porous layer 20 on a side opposite to the optical functional layer **10.** As required, another pressure-sensitive adhesive layer **40** may be arranged as the outermost layer on a second main surface **10b** side of the optical functional layer **10.** The pressure-sensitive adhesive layer **30** and the other pressure-sensitive adhesive layer **40** may be referred to as "first pressure-sensitive adhesive layer" and "second pressure-sensitive adhesive layer," respectively, for convenience. For practical use, a release liner (not shown) is preferably temporarily attached to a surface of each of the first pressure-sensitive adhesive layer and the second pressure-sensitive adhesive layer until the laminated film is used. When the release liner is temporarily attached, the first pressure-sensitive adhesive layer and the second pressure-sensitive adhesive layer are protected, and formation of a roll of the laminated film is enabled.

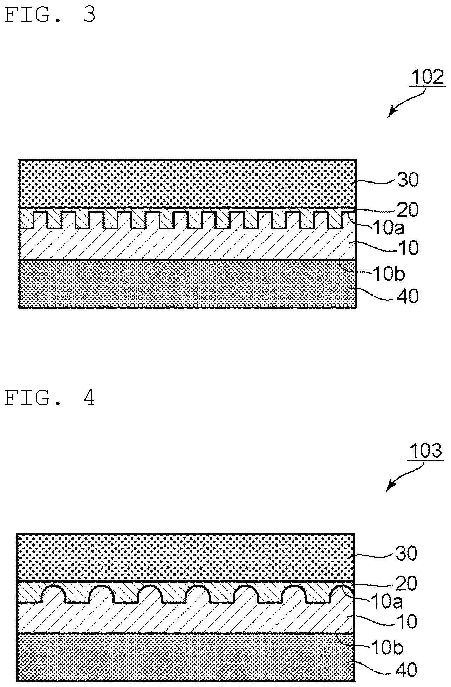

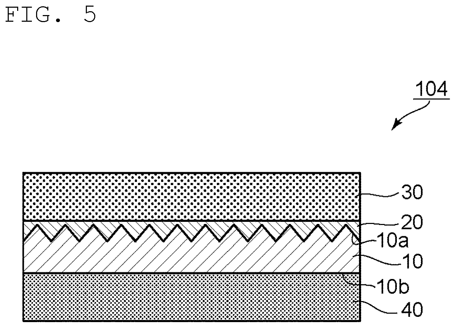

In the embodiment of the present invention, the optical functional layer **10** typically has a function of changing a direction of light. A laminated film including such optical functional layer can achieve the following effects in accordance with the kind of the optical functional layer: (1) various products are subjected to surface decoration, and hence design properties thereof can be improved; (2) a color of a display image can be changed in accordance with a viewing angle; and (3) a different image can be displayed in accordance with the viewing angle. Accordingly, the laminated film according to the embodiment of the present invention may also be referred to as "decorative film," "optical laminate," or the like. Typical examples of the optical functional layer include a reflection-type hologram film, a microlens array film, and a prism film. FIG. **1** and FIG. **2** are each a schematic sectional view of a laminated film including a reflection-type hologram film serving as the optical functional layer, FIG. **3** is a schematic sectional view of a laminated film including another reflection-type hologram film serving as the optical functional layer, FIG. **4** is a schematic sectional view of a laminated film including a microlens array film serving as the optical functional layer, and FIG. **5** is a schematic sectional view of a laminated film including a prism film serving as the optical functional layer. According to the embodiment of the present invention, even when the first pressure-sensitive adhesive layer is arranged on the first main surface (uneven surface) side of the optical functional layer to protect the optical functional layer, functional deterioration of the optical functional layer due to the first pressure-sensitive adhesive layer can be suppressed. Further, when the optical functional layer is a hologram film (typically, a reflection-type hologram film), the function of the optical functional layer can be satisfactorily expressed without arrangement of a metal layer or a metal oxide layer on the first main surface (uneven surface). As a result, the effects of the optical functional layer can be obtained while transparency is ensured. Thus, even when a hologram film is used as the optical functional layer, the range of applications of the laminated film can be remarkably expanded. The configurations of the reflection-type hologram film, the microlens array film, and the prism film are described later in the sections B-1 to B-3, respectively.

The height and shape of the unevenness of the first main surface **10a** of the optical functional layer **10** may be appropriately set in accordance with purposes (accordingly, the kind of the optical functional layer). In the embodiment of the present invention, the height of the unevenness of the first main surface is from 200 nm to 100 um. When the optical functional layer is a reflection-type hologram film, the height of the unevenness may be typically less than several micrometers or in a nanometer order. When the optical functional layer is a microlens array film or a prism film, the height of the unevenness may be typically in a micrometer order (from about several micrometers to about 100 µm). Herein, the "height of unevenness" means a distance from a peak (or top) to a bottom (or flat portion) of one uneven portion, and when the unevenness is an irregular structure, the "height of unevenness" means an average of the distance from a peak (or top) to a bottom (or flat portion) of each of uneven portions. In addition, a "pitch of unevenness" means a distance from a peak (or top) to an adjacent peak (or top), and when the unevenness is an irregular structure, the "pitch of unevenness" means an average of the distance between adjacent peaks (tops). Details about the height and shape of the unevenness of the first main surface are described later in the sections B-1 to B-3 together with the configurations of the reflection-type hologram film, the microlens array film, and the prism film.

The porous layer **20** preferably has an extremely low refractive index and extremely high transparency as described later in the section C. When such porous layer is used, appropriate reflection can be achieved at an interface with the optical functional layer, and the transparency of the laminated film as a whole can be ensured. As a result, the function of changing a direction of light of the optical functional layer can be sufficiently exhibited, and a product structure and visibility of an image and the like on a side opposite to a viewer side of the optical functional layer can be ensured. The porous layer **20** may be formed on the first main surface **10a** of the optical functional layer **10** via an adhesion layer, or may be formed directly on the first main surface. The porous layer is preferably formed directly on the first main surface. With such configuration, adverse effects caused by the refractive index of the adhesion layer can be prevented. Such direct formation may be achieved by, for example, applying or printing a liquid for forming a porous layer as described later. The porous layer **20** may have an uneven surface on the first pressure-sensitive adhesive layer **30** side (may follow the unevenness of the first main surface **10a** of the optical functional layer **10**) as illustrated in FIG. **1****,** or may have a flat surface on the first pressure-sensitive adhesive layer 30 side as illustrated in FIG. **2****.** The configuration of the porous layer with a flat surface on the first pressure-sensitive adhesive layer side as illustrated in FIG. **2** may be achieved by, for example, filling depressed portions by increasing the thickness of the porous layer.

The difference in transmittance ΔY of the laminated film is preferably from -5 to +2, more preferably from -5 to +1, still more preferably from -5 to 0. According to the embodiment of the present invention, the laminated film as a whole can achieve excellent transparency. As a result, when the laminated film is applied to various products, a product structure and visibility of an image and the like on a side opposite to a viewer side of the optical functional layer can be ensured. The difference in transmittance ΔY may be calculated as follows. The transmittance of the laminated film is measured. Then, from a transmission spectrum thereof, a Y value in an XYZ colorimetric system is calculated, and the Y value is referred to as "Ya value." Meanwhile, the Y value of a film having a similar configuration except that the porous layer is not included is calculated in a similar manner, and the Y value is referred to as "Yb value." The difference in transmittance ΔY is calculated by ΔY=Yb-Ya. The difference in transmittance ΔY may serve as an indicator of the transparency of the laminated film.

The difference in haze ΔH of the laminated film is preferably from 0.1% to 1.0%, more preferably from 0.1% to 0.8%, still more preferably from 0.1% to 0.5%. According to the embodiment of the present invention, the haze of the laminated film as a whole can be reduced. As a result, when the laminated film is applied to various products, a product structure and visibility of an image and the like on a side opposite to a viewer side of the optical functional layer can be ensured. The difference in haze ΔH may be calculated as follows. The haze of the laminated film is measured and is referred to as "Ha value." Meanwhile, the haze of a film having a similar configuration except that the porous layer is not included is calculated in a similar manner and is referred to as "Hb value." The difference in haze ΔH is calculated by ΔH=Ha-Hb. The difference in haze ΔH may serve as an indicator of the transparency of the laminated film.

The above-mentioned embodiments may be appropriately combined. For example, the porous layer may be formed following the unevenness of the first main surface of the optical functional layer illustrated in each of FIG. **3** to FIG. **5****.**

Constituent elements of the laminated film are described in detail below.

### B. Optical Functional Layer

In the embodiment of the present invention, the optical functional layer **10** may be, as described above, a reflection-type hologram film, a microlens array film, or a prism film. Those films may each be produced by a method well-known in the art by using a material well-known in the art, and hence descriptions of constituent materials and production methods therefor are omitted.

### B-1. Reflection-type Hologram Film

In the embodiment of the present invention, the porous layer is formed on the first main surface (uneven surface) of the reflection-type hologram film, and hence a hologram function can be exhibited without formation of a metal reflective layer on the reflection-type hologram film. Any appropriate configuration may be adopted for the reflection-type hologram film. Any appropriate fine uneven shape capable of exhibiting a function, such as light diffusion, light scattering, light reflection, or light diffraction, may be adopted as an uneven shape of the reflection-type hologram film. Typical examples of the uneven shape include a Fourier transformation structure, a lenticular lens structure, a light diffraction pattern, and a moth-eye structure. In addition, an uneven shape capable of exhibiting specific brightness but without a light diffraction function, such as a hairline pattern, a mat pattern, a parallel-line pattern, or an interference pattern, may be adopted. In one embodiment, the reflection-type hologram film can convert reflected light into diffracted light.

In one embodiment, as illustrated in FIG. 1, the reflection-type hologram film may have a wavy cross section in which an uneven shape extends in one direction. The direction in which the unevenness extends may be appropriately set in accordance with purposes. In this case, the pitch of the unevenness is preferably from 100 nm to 900 nm, more preferably from 200 nm to 800 nm, still more preferably from 300 nm to 700 nm, particularly preferably from 400 nm to 600 nm. The height of the unevenness is, for example, from 10 nm to 100 µm, preferably from 50 nm to 100 µm, more preferably from 100 nm to 2,000 nm, still more preferably from 200 nm to 700 nm, particularly preferably from 220 nm to 600 nm, especially preferably from 240 nm to 500 nm, most preferably from 260 nm to 350 nm. In another embodiment, as illustrated in FIG. 3, the reflection-type hologram film may have a rectangular cross section having an uneven shape including a protruding portion extending in one direction arranged at regular intervals (a stripe pattern in plan view, a so-called line-and-space pattern). The direction in which the unevenness extends may be appropriately set in accordance with purposes. The width of the protruding portion may be, for example, from 50 nm to 350 nm, may be, for example, from 100 nm to 300 nm, or may be, for example, from 150 nm to 250 nm. In this case, the pitch of the unevenness may be, for example, from 50 nm to 350 nm, may be, for example, from 100 nm to 300 nm, or may be, for example, from 150 nm to 250 nm. The height of the unevenness may be the same as in the case in which the film has a wavy cross section in which the uneven shape extends in one direction, and may be, for example, from 50 nm to 350 nm, may be, for example, from 100 nm to 300 nm, or may be, for example, from 150 nm to 250 nm. When the reflection-type hologram film has a configuration as illustrated in FIG. 3, the width of the protruding portion may be, for example, from 500 nm to 1,500 nm (1.5 um), may be, for example, from 700 nm to 1,300 nm (1.3 µm), or may be, for example, from 900 nm to 1,100 nm (1.1 µm). In this case, the pitch of the unevenness may be, for example, from 500 nm to 1,500 nm (1.5 um), may be, for example, from 700 nm to 1,300 nm (1.3 um), or may be, for example, from 900 nm to 1,100 nm (1.1 µm). The height of the unevenness may be the same as in the case in which the film has a wavy cross section in which the uneven shape extends in one direction, and may be, for example, from 500 nm to 4,000 nm (4.0 µm), may be, for example, from 1,000 nm (1.0 um) to 3,000 nm (3.0 um), or may be, for example, from 1,500 nm (1.5 um) to 2,500 nm (2.5 um). Even in the case where the reflection-type hologram film has any of the above-mentioned configurations, as long as the height and pitch of the unevenness fall within the above-mentioned ranges, the function of changing a direction of light can be satisfactorily maintained.

### B-2. Microlens Array Film

The microlens array film has, as illustrated in FIG. **4****,** a flat base portion and a lens portion arranged on one surface of the base portion. The lens portion is formed of a plurality of lenses. The lens forming the lens portion is typically a convex lens, and may have a dome shape as illustrated in FIG. **4****,** for example. The lens may be arranged in a lined pattern (matrix pattern) as illustrated in FIG. **4****,** may be arranged in a predetermined pattern (e.g., stripe pattern), or may be arranged randomly. In the embodiment of FIG. **4****,** the pitch of the unevenness (lens) is preferably from 50 um to 500 µm, more preferably from 70 um to 400 µm, still more preferably from 100 um to 300 µm, particularly preferably from 150 um to 250 um. The height of the unevenness (lens) is preferably from 2 um to 25 µm, more preferably from 4 um to 20 µm, still more preferably from 6 um to 15 µm, particularly preferably from 8 um to 12 um. In this case, the diameter of the lens (the diameter of a lens bottom part which is a surface connected to the base portion) is preferably from 20 um to 200 µm, more preferably from 40 um to 180 µm, still more preferably from 60 um to 150 um, particularly preferably from 80 um to 120 um. In the case where the optical functional layer is a microlens array film, as long as the height, pitch, and diameter of the lens fall within such ranges, the function of changing a direction of light can be satisfactorily maintained.

### B-3. Prism Film

The prism film has, as illustrated in FIG. **5****,** a flat base portion and a prism portion. The prism portion typically has a triangular cross section which protrudes to a side opposite to the base portion and is formed by arranging a plurality of unit prisms extending in one direction. The direction in which the unit prism extends (a ridge direction of the unit prism) may be appropriately set in accordance with purposes. In the embodiment of FIG. **5****,** the pitch of the unevenness (unit prism) is preferably from 5 um to 25 µm, more preferably from 8 um to 20 µm, still more preferably from 10 um to 18 µm, particularly preferably from 12 um to 16 um. The height of the unevenness (unit prism) is preferably from 2 um to 25 µm, more preferably from 4 um to 20 µm, still more preferably from 6 um to 15 µm, particularly preferably from 8 um to 12 um. The base length of the unit prism is preferably from 5 um to 25 µm, more preferably from 8 um to 20 µm, still more preferably from 10 um to 18 µm, particularly preferably from 12 um to 16 um. In the case where the optical functional layer is a prism film, as long as the pitch, height, and base length of the unit prism fall within such ranges, the function of changing a direction of light can be satisfactorily maintained.

### C. Porous Layer

The porous layer typically has pores therein. The porosity of the porous layer is preferably from 20 vol% to 60 vol%, more preferably from 25 vol% to 55 vol%, still more preferably from 30 vol% to 50 vol%, particularly preferably from 35 vol% to 45 vol%. When the porosity falls within such ranges, the refractive index of the porous layer can be set within an appropriate range, and a predetermined mechanical strength can be ensured. The porosity is a value calculated from the value of the refractive index measured with an ellipsometer by using Lorentz-Lorenz's formula.

The refractive index of the porous layer is preferably from 1.15 to 1.30, more preferably from 1.17 to 1.28, still more preferably from 1.18 to 1.26, particularly preferably from 1.19 to 1.24. When the porous layer having such refractive index is arranged on the first main surface (uneven surface) of the optical functional layer, appropriate reflection can be achieved at an interface with the optical functional layer. As a result, the function of changing a direction of light of the optical functional layer can be sufficiently exhibited. The refractive index refers to a refractive index measured at a wavelength of 550 nm unless otherwise stated. The refractive index is a value measured by a method described later in the section [(1) Refractive Index of Porous Layer] in Examples.

The total light transmittance of the porous layer is preferably from 85% to 99%, more preferably from 87% to 98%, still more preferably from 89% to 97%. When the porous layer having such total light transmittance is arranged on the first main surface (uneven surface) of the optical functional layer, the laminated film as a whole can achieve excellent transparency. As a result, when the laminated film is applied to various products, a product structure and visibility of an image and the like on a side opposite to a viewer side of the optical functional layer can be ensured.

The haze of the porous layer is, for example, less than 5%, preferably less than 3%. Meanwhile, the haze is, for example, 0.1% or more, preferably 0.2% or more. When the porous layer having such haze is arranged on the first main surface (uneven surface) of the optical functional layer, the laminated film as a whole can achieve excellent transparency. As a result, when the laminated film is applied to various products, a product structure and visibility of an image and the like on a side opposite to a viewer side of the optical functional layer can be ensured. The haze may be measured by, for example, such a method as described below.

The pore layer (porous layer) is cut into a size of 50 mm by 50 mm, and is set in a haze meter (manufactured by Murakami Color Research Laboratory Co., Ltd.: HM-150), followed by the measurement of its haze. The haze value is calculated from the following equation. Haze (%)=[diffuse transmittance (%)/total light transmittance (%)] × 100 (%)

The thickness of the porous layer is preferably from 30 nm to 5 µm, more preferably from 200 nm to 4 µm, still more preferably from 400 nm to 2 µm, particularly preferably from 600 nm to 1 um. When the thickness of the porous layer falls within such ranges, the function of changing a direction of light can be satisfactorily maintained. When the porous layer has a configuration of a flat surface on the first pressure-sensitive adhesive layer **30** side as illustrated in each of FIG. **2** to FIG. **5****,** the thickness of the porous layer means the maximum thickness.

Any appropriate configuration may be adopted for the porous layer as long as the layer has the above-mentioned desired characteristics. The porous layer may be preferably formed through, for example, application or printing. Materials described in, for example, WO 2004/113966 A1, JP 2013-254183 A, and JP 2012-189802 A may each be adopted as a material for forming the porous layer. A typical example thereof is a silicon compound. Examples of the silicon compound include: silica-based compounds; hydrolyzable silanes, and partial hydrolysates and dehydration condensates thereof; silanol group-containing silicon compounds; and active silica obtained by bringing a silicate into contact with an acid or an ion-exchange resin. Examples thereof also include: organic polymers; polymerizable monomers (e.g., a (meth)acrylic monomer and a styrene-based monomer); and curable resins (e.g., a (meth)acrylic resin, a fluorine-containing resin, and a urethane resin). Those materials may be used alone or in combination thereof. The porous layer may be formed by, for example, applying or printing a solution or a dispersion liquid of such material.

The size of each of the pores (holes) in the porous layer refers to a major axis diameter out of the major axis diameter and minor axis diameter of the pore (hole). The sizes of the pores (holes) are, for example, from 2 nm to 500 nm. The sizes of the pores (holes) are, for example, 2 nm or more, preferably 5 nm or more, more preferably 10 nm or more, still more preferably 20 nm or more. Meanwhile, the sizes of the pores (holes) are, for example, 500 nm or less, preferably 200 nm or less, more preferably 100 nm or less. The range of the sizes of the pores (holes) is, for example, from 2 nm to 500 nm, preferably from 5 nm to 500 nm, more preferably from 10 nm to 200 nm, still more preferably from 20 nm to 100 nm. The sizes of the pores (holes) may be adjusted to desired sizes in accordance with, for example, purposes and applications.

The sizes of the pores (holes) may be quantified by a BET test method. Specifically, 0.1 g of a sample (formed pore layer) is loaded into the capillary of a specific surface area-measuring apparatus (manufactured by Micromeritics Instrument Corporation, ASAP 2020), and is then dried under reduced pressure at room temperature for 24 hours so that a gas in its pore structure may be removed. Then, an adsorption isotherm is drawn by causing the sample to adsorb a nitrogen gas, and its pore size distribution is determined. Thus, the pore sizes may be evaluated.

The porous layer having the pores therein is, for example, a porous layer and/or a porous layer having an air layer in at least part thereof. The porous layer typically contains aerogel and/or particles (e.g., hollow fine particles and/or porous particles). The porous layer may be preferably a nanoporous layer (specifically a porous layer in which the diameters of 90% or more of micropores fall within the range of from 10⁻¹ nm to 10³ nm) .

Any appropriate particles may be adopted as the particles. The particles are each typically formed of a silica-based compound. Examples of the shapes of the particles include a spherical shape, a plate shape, a needle shape, a string shape, and a botryoidal shape. String-shaped particles are, for example, particles in which a plurality of particles each having a spherical shape, a plate shape, or a needle shape are strung together like beads, short fiber-shaped particles (e.g., short fiber-shaped particles described in JP 2001-188104 A), and a combination thereof. The string-shaped particles may be linear or may be branched. Botryoidal-shaped particles are, for example, particles in which a plurality of spherical, plate-shaped, and needle-shaped particles aggregate to form a botryoidal shape. The shapes of the particles may be identified through, for example, observation with a transmission electron microscope.

An example of a specific configuration of the porous layer is described below. The porous layer of this embodiment is formed of one or a plurality of kinds of constituent units each forming a fine pore structure, and the constituent units are chemically bonded to each other through a catalytic action. Examples of the shape of each of the constituent units include a particle shape, a fiber shape, a rod shape, and a flat plate shape. The constituent units may have only one shape, or may have two or more shapes in combination. In the following description, a case in which the porous layer is a pore layer of a porous body in which the microporous particles are chemically bonded to each other is mainly described.

Such pore layer may be formed by, for example, chemically bonding the microporous particles to each other in a pore layer-forming step. In the embodiment of the present invention, the shapes of the "particles" (e.g., the microporous particles) are not particularly limited. For example, the shapes may each be a spherical shape, or may each be any other shape. In addition, in the embodiment of the present invention, the microporous particles may be, for example, sol-gel beaded particles, nanoparticles (hollow nanosilica nanoballoon particles), or nanofibers. The microporous particles each typically contain an inorganic substance. Specific examples of the inorganic substance include silicon (Si), magnesium (Mg), aluminum (Al), titanium (Ti), zinc (Zn), and zirconium (Zr). Those inorganic substances may be used alone or in combination thereof. In one embodiment, the microporous particles are, for example, microporous particles of a silicon compound, and the porous body is, for example, a silicone porous body. The microporous particles of the silicon compound each contain, for example, a pulverized body of a gel-like silica compound. In addition, another form of the porous layer and/or the porous layer having an air layer in at least part thereof is, for example, a pore layer having the following features: the layer is formed of fibrous substances such as nanofibers; and the fibrous substances are entangled with each other to form pores, thereby forming the layer. A method of producing such pore layer is not particularly limited, and is the same as that in the case of, for example, the pore layer of the porous body in which the microporous particles are chemically bonded to each other. Still another form thereof is, for example, a pore layer using hollow nanoparticles or nanoclay, or a pore layer formed by using hollow nanoballoons or magnesium fluoride. The pore layer may be a pore layer formed of a single constituent substance, or may be a pore layer formed of a plurality of constituent substances. The pore layer may include any one of the above-mentioned forms, or may include two or more of the above-mentioned forms.

In this embodiment, the porous structure of the porous body may be, for example, an open-cell structural body in which hole structures are continuous with each other. The open-cell structural body means, for example, that the hole structures are three-dimensionally continuous with each other in the silicone porous body, and can be said to be a state in which the internal pores of the hole structures are continuous with each other. When the porous body has an open-cell structure, its porosity can be increased. However, when closed-cell particles (particles each individually having a hole structure) such as hollow silica are used, an open-cell structure cannot be formed. Meanwhile, for example, when silica sol particles (pulverized products of a gel-like silicon compound that forms sol) are used, the particles each have a three-dimensional dendritic structure, and hence the dendritic particles are sedimented and deposited in a coating film (coating film of the sol containing the pulverized products of the gel-like silicon compound). Accordingly, an open-cell structure can be easily formed. The porous layer more preferably has a monolith structure in which an open-cell structure includes a plurality of pore size distributions. The monolith structure means, for example, a hierarchical structure including a structure in which nanosized fine pores are present and an open-cell structure in which the nanosized pores assemble. When the monolith structure is formed, both of film strength and a high porosity may be achieved by, for example, imparting the high porosity to the layer through use of a coarse open-cell pore while imparting the film strength thereto through use of a fine pore. Such monolith structure may be preferably formed by controlling the pore size distribution of a pore structure to be produced in the gel (gel-like silicon compound) at a stage before its pulverization into the silica sol particles. In addition, the monolith structure may be formed by, for example, controlling the particle size distribution of the silica sol particles after the pulverization to a desired size at the time of the pulverization of the gel-like silicon compound.

The porous layer contains, for example, the pulverized products of a gel-like compound as described above, and the pulverized products are chemically bonded to each other. The form of the chemical bond (chemical bonding) between the pulverized products in the porous layer is not particularly limited, and examples thereof include a cross-linking bond, a covalent bond, and a hydrogen bond.

The volume-average particle diameter of the pulverized products in the porous layer is, for example, 0.10 um or more, preferably 0.20 um or more, more preferably 0.40 um or more. Meanwhile, the volume-average particle diameter is, for example, 2.00 um or less, preferably 1.50 um or less, more preferably 1.00 um or less. The range of the volume-average particle diameter is, for example, from 0.10 um to 2.00 um, preferably from 0.20 um to 1.50 um, more preferably from 0.40 um to 1.00 um. The particle size distribution of the pulverized products may be measured with, for example, a particle size distribution-evaluating apparatus based on a dynamic light scattering method, a laser diffraction method, or the like, and an electron microscope, such as a scanning electron microscope (SEM) or a transmission electron microscope (TEM). The volume-average particle diameter is an indicator of a variation in particle size of the pulverized products.

The kind of the gel-like compound is not particularly limited. The gel-like compound is, for example, a gel-like silicon compound.

In addition, in the porous layer (pore layer), for example, silicon atoms to be incorporated preferably form a siloxane bond. As a specific example, the ratio of unbonded silicon atoms (in other words, residual silanol groups) out of all the silicon atoms in the pore layer is, for example, less than 50%, preferably 30% or less, more preferably 15% or less.

An example of a method of forming such porous layer is described below.

The method typically includes: a precursor-forming step of forming a pore structure, which is a precursor of the porous layer (pore layer), on a resin film; and a cross-linking reaction step of causing a cross-linking reaction in the precursor after the precursor-forming step. The method further includes: a containing liquid-producing step of producing a containing liquid containing microporous particles (hereinafter sometimes referred to as "microporous particle-containing liquid" or simply "containing liquid"); and a drying step of drying the containing liquid. In the precursor-forming step, the microporous particles in a dried body are chemically bonded to each other to form the precursor. The containing liquid is not particularly limited, and is, for example, a suspension containing the microporous particles. In the following, a case in which the microporous particles are pulverized products of the gel-like compound, and the pore layer is a porous body (preferably a silicone porous body) containing the pulverized products of the gel-like compound is mainly described. However, even when the microporous particles are products other than the pulverized products of the gel-like compound, the porous layer may be similarly formed.

According to the above-mentioned method, for example, a porous layer (pore layer) having an extremely low refractive index is formed. A reason for the foregoing is assumed to be, for example, as described below. However, the assumption does not limit the method of forming the porous layer.

The above-mentioned pulverized products are obtained by pulverizing the gel-like silicon compound, and hence a state in which the three-dimensional structure of the gel-like silicon compound before the pulverization is dispersed in a three-dimensional basic structure is established. Further, in the above-mentioned method, the application of the crushed products of the gel-like silicon compound onto the resin film results in the formation of the precursor of a porous structure based on the three-dimensional basic structure. In other words, according to the method, a new porous structure (three-dimensional basic structure) different from the three-dimensional structure of the gel-like silicon compound is formed by the application of the pulverized products. Accordingly, in the pore layer to be finally obtained, such a low refractive index that the layer functions to the same extent as, for example, an air layer does can be achieved. Further, in the method, the three-dimensional basic structure is fixed because the pulverized products are chemically bonded to each other. Accordingly, the pore layer to be finally obtained can maintain sufficient strength and sufficient flexibility despite the fact that the layer is a structure having pores.

Details about specific configurations of the porous layer and the method of forming the porous layer are described in, for example, WO 2019/151073 A1, the description of which is incorporated herein by reference.

### D. First Pressure-sensitive Adhesive Layer

The first pressure-sensitive adhesive layer has such hardness that under a normal state, a pressure-sensitive adhesive for forming the first pressure-sensitive adhesive layer does not permeate the pores of the porous layer. The storage modulus of elasticity of the first pressure-sensitive adhesive layer at 23°C is typically from 1.0×10⁵ (Pa) to 1.0×10⁷ (Pa). The storage modulus of elasticity is, for example, 1.1×10⁵ (Pa) or more, 1.2×10⁵ (Pa) or more, 1.3×10⁵ (Pa) or more, 1.4×10⁵ (Pa) or more, 1.5×10⁵ (Pa) or more, 1.6×10⁵ (Pa) or more, 1.7×10⁵ (Pa) or more, 1.8×10⁵ (Pa) or more, 1.9×10⁵ (Pa) or more, or 2.0×10⁵ (Pa) or more, and 1.0×10⁷ (Pa) or less, 5.0×10⁶ (Pa) or less, 1.0×10⁶ (Pa) or less, or 5.0×10⁵ (Pa) or less. The storage modulus of elasticity is preferably from 1.3×10⁵ (Pa) to 1.0×10⁶ (Pa), more preferably from 1.5×10⁵ (Pa) to 5.0×10⁵ (Pa). The storage modulus of elasticity is determined by reading a value at 23°C at the time of measurement in conformity with a method described in JIS K 7244-1 "Plastics-Determination of dynamic mechanical properties" under the condition of a frequency of 1 Hz in the range of from -50°C to 150°C at a rate of temperature increase of 5°C/min.

Any appropriate pressure-sensitive adhesive may be used as the pressure-sensitive adhesive for forming the first pressure-sensitive adhesive layer as long as the pressure-sensitive adhesive has such characteristic as described above. The pressure-sensitive adhesive is typically, for example, an acrylic pressure-sensitive adhesive (acrylic pressure-sensitive adhesive composition). The acrylic pressure-sensitive adhesive composition typically contains a (meth)acrylic polymer as a main component (base polymer). The (meth)acrylic polymer may be incorporated into the pressure-sensitive adhesive composition at a ratio of, for example, 50 wt% or more, preferably 70 wt% or more, more preferably 90 wt% or more in the solid content of the pressure-sensitive adhesive composition. The (meth)acrylic polymer contains, as a main component, an alkyl (meth)acrylate serving as a monomer unit. The term "(meth)acrylate" refers to an acrylate and/or a methacrylate. The alkyl group of the alkyl (meth)acrylate is, for example, a linear or branched alkyl group having 1 to 18 carbon atoms. The average number of carbon atoms of the alkyl group is preferably from 3 to 9. As a monomer for forming the (meth)acrylic polymer, in addition to the alkyl (meth)acrylate, there are given comonomers, such as a carboxyl group-containing monomer, a hydroxyl group-containing monomer, an amide group-containing monomer, an aromatic ring-containing (meth)acrylate, and a heterocycle-containing (meth)acrylate. The comonomer is preferably a hydroxyl group-containing monomer and/or a heterocycle-containing (meth)acrylate, more preferably N-acryloylmorpholine. The acrylic pressure-sensitive adhesive composition may preferably contain a silane coupling agent and/or a cross-linking agent. The silane coupling agent is, for example, an epoxy group-containing silane coupling agent. The cross-linking agent is, for example, an isocyanate-based cross-linking agent or a peroxide-based cross-linking agent. Details about such pressure-sensitive adhesive layer or acrylic pressure-sensitive adhesive composition are described in, for example, JP 4140736 B2, the description of which is incorporated herein by reference.

The thickness of the first pressure-sensitive adhesive layer is preferably from 3 um to 30 µm, more preferably from 5 um to 10 um. When the thickness of the first pressure-sensitive adhesive layer falls within such ranges, the following advantage is obtained: an influence on the optical functional layer is small while the layer has a sufficient adhesive strength.

### E. Second Pressure-sensitive Adhesive Layer

The second pressure-sensitive adhesive layer includes any appropriate pressure-sensitive adhesive. In one embodiment, the second pressure-sensitive adhesive layer includes a pressure-sensitive adhesive having such softness as to be capable of absorbing the transfer of vibration to suppress the breakage of the porous layer. The storage modulus of elasticity of the second pressure-sensitive adhesive layer at 23°C is, for example, 1.0×10⁵ (Pa) or less, and is, for example, 9.5×10⁴ (Pa) or less, 9.0×10⁴ (Pa) or less, 8.5×10⁴ (Pa) or less, 8.0×10⁴ (Pa) or less, 7.5×10⁴ (Pa) or less, or 7.0×10⁴ (Pa) or less, and 1.0×10³ (Pa) or more, 5.0×10³ (Pa) or more, 1.0×10⁴ (Pa) or more, or 5.0×10⁴ (Pa) or more. The storage modulus of elasticity is preferably from 5.0×10³ (Pa) to 9.0×10⁴ (Pa), more preferably from 1.0×10⁴ (Pa) to 8.5×10⁴ (Pa) .

Any appropriate pressure-sensitive adhesive may be used as the pressure-sensitive adhesive for forming the second pressure-sensitive adhesive layer as long as the pressure-sensitive adhesive has such characteristic as described above. The pressure-sensitive adhesive is typically, for example, an acrylic pressure-sensitive adhesive (acrylic pressure-sensitive adhesive composition). The acrylic pressure-sensitive adhesive composition is as described in the section D. However, the pressure-sensitive adhesive for forming the second pressure-sensitive adhesive layer is preferably free of a heterocycle-containing (meth)acrylate as a comonomer. In addition, the weight-average molecular weight Mw of a base polymer in the pressure-sensitive adhesive composition is preferably 2,000,000 or less, more preferably from 5,000 to 1,600,000. Details about the second pressure-sensitive adhesive layer or the acrylic pressure-sensitive adhesive composition for forming the second pressure-sensitive adhesive layer are described in, for example, JP 2016-190996 A, the description of which is incorporated herein by reference.

The thickness of the second pressure-sensitive adhesive layer is preferably from 5 µm to 300 µm, more preferably from 10 um to 200 um. When the thickness of the second pressure-sensitive adhesive layer falls within such ranges, impact is alleviated particularly at the time of the vibration of the laminated film in a lateral direction, and hence damage to the porous layer can be reduced.

### F. Use Mode of Laminated film

As described above, the laminated film can be typically used as a decorative film or signage. For example, the laminated film can be bonded to an image display apparatus (typically, a smartphone or a tablet terminal) to be used as signage. In addition, for example, the laminated film can be bonded to a back surface of a smartphone to be used as a decorative film.

### Examples

Now, the present invention is specifically described by way of Examples. However, the present invention is not limited to these Examples. Measurement methods for characteristics are as described below. In addition, unless otherwise specified, "%" and "part (s)" in Examples are by weight.

### (1) Refractive Index of Porous Layer

After a porous layer had been formed on an acrylic film, the resultant was cut into a piece having a size of 25 mm by 50 mm, and the piece was bonded to a surface of a glass plate (thickness: 3 mm) via a pressure-sensitive adhesive. A central portion (diameter: about 20 mm) of a back surface of the glass plate was completely colored with a black marker pen. Thus, a sample by which light was not reflected on the back surface of the glass plate was obtained. The sample was set in an ellipsometer (manufactured by J.A. Woollam Japan: VASE), and the refractive index of the porous layer was measured under the conditions of a wavelength of 550 nm and an incident angle of from 50° to 80°.

### (2) Peel Test

A laminated film obtained in each of Examples and Comparative Examples was cut into a size of 25 mm by 50 mm to prepare a test sample. The test sample was subjected to a 180° peel test in which the porous layer was peeled from the optical functional layer by using a tensile tester (product name: TCM-1kNB, manufactured by Minebea Co., Ltd.). An interlayer adhesive strength between the optical functional layer and the porous layer (180° peel adhesive strength) (N/25 mm) was measured and evaluated by the below-indicated criteria. The measurement was performed under the conditions of an atmosphere of 23°C and 50%RH, a peel angle of 180°, and a tensile rate of 300 mm/min.
o (Satisfactory): The adhesive strength was 0.5 (N/25 mm) or more.
× (Poor): The adhesive strength was less than 0.5 (N/25 mm) .

### (3) Fixing Property

A fixing property was measured in accordance with JIS K 5600. Specifically, a transparent resin film was arranged on the outermost layer on a first main surface (uneven surface) side of the optical functional layer of a laminated film obtained in each of Examples and Comparative Examples. Whether or not the resin film moved under the conditions of steel wool #0000, a load of 250 g, and a stroke of 25 mm was observed, and the result was evaluated by the below-indicated criteria. In Comparative Example 5, the resultant laminated film itself was subjected to the test.
o (Satisfactory): The film moved.
× (Poor): The film did not move.

### (4) Change in Visibility by Angle

A transparent resin film was arranged on the outermost layer on a first main surface (uneven surface) side of the optical functional layer of a laminated film obtained in each of Examples and Comparative examples to prepare a test sample. In Comparative Example 5, the resultant laminated film itself was used as a test sample. A light source was arranged in a normal direction on the transparent resin film side of the test sample, and a dot image having a diameter of 5 mm and a pitch of 15 mm was placed on a side opposite to the transparent resin film of the test sample. The image was observed through the test sample from the normal direction and a direction at a polar angle of 45° with respect to the normal direction, and the result was evaluated by the below-indicated criteria.
o (Satisfactory): The image (size, shape, and color of dots) changed overall when observed from the normal direction and the direction at an angle of 45°.
Δ (Fair): The image (size, shape, and color of dots) changed in some regions when observed from the normal direction and the direction at an angle of 45°.
× (Poor): No change in image (size, shape, and color of dots) when observed from the normal direction and the direction at an angle of 45°.

### (5) Difference in Transmittance ΔY

The transmittance of a laminated film obtained in each of Examples and Comparative Examples was measured by using a spectrophotometer (manufactured by Hitachi, Ltd., "U-4100"). Then, from a transmission spectrum thereof, a Y value in an XYZ colorimetric system was calculated, and the Y value was referred to as "Ya value." Meanwhile, the Y value of a film having a similar configuration except that the porous layer was not included was calculated in a similar manner, and the Y value was referred to as "Yb value." The difference in transmittance ΔY was calculated by ΔY=Yb-Ya, and evaluated by the below-indicated criteria. The difference in transmittance ΔY serves as an indicator of the transparency.
o (Satisfactory): The ΔY was less than 2.0.
× (Poor): The ΔY was 2.0 or more.

### [Production Example 1] Preparation of Coating Liquid for forming Porous Layer

### (1) Gelation of Silicon Compound

0.95 g of methyltrimethoxysilane (MTMS) that was a precursor of a silicon compound was dissolved in 2.2 g of dimethyl sulfoxide (DMSO). Thus, a mixed liquid A was prepared. 0.5 g of a 0.01 mol/L aqueous solution of oxalic acid was added to the mixed liquid A, and the mixture was stirred at room temperature for 30 minutes so that MTMS was hydrolyzed. Thus, a mixed liquid B containing tris(hydroxy)methylsilane was produced.

0.38 g of 28 wt% ammonia water and 0.2 g of pure water were added to 5.5 g of DMSO, and then the mixed liquid B was further added to the mixture, followed by stirring at room temperature for 15 minutes to perform the gelation of tris(hydroxy)methylsilane. Thus, a mixed liquid C containing a gel-like silicon compound was obtained.

### (2) Aging Treatment

Aging treatment was performed by incubating the mixed liquid C containing the gel-like silicon compound, which had been prepared as described above, as it was at 40°C for 20 hours.

### (3) Pulverization Treatment

Next, the gel-like silicon compound subjected to the aging treatment as described above was crushed into granular shapes each having a size of from several millimeters to several centimeters with a spatula. Next, 40 g of isopropyl alcohol (IPA) was added to the mixed liquid C, and the mixture was lightly stirred. After that, the mixture was left at rest at room temperature for 6 hours so that the solvent and the catalyst in the gel were decanted. Similar decantation treatment was performed three times to replace the solvent with IPA. Thus, a mixed liquid D was obtained. Next, the gel-like silicon compound in the mixed liquid D was subjected to pulverization treatment (high-pressure media-less pulverization). The pulverization treatment (high-pressure media-less pulverization) was performed as follows: a homogenizer (manufactured by SMT Co., Ltd., product name: "UH-50") was used, and 1.85 g of the gel-like silicon compound in the mixed liquid D and 1.15 g of IPA were weighed in a 5-cubic centimeter screw bottle, followed by the performance of the pulverization of the mixture under the conditions of 50 W and 20 kHz for 2 minutes.

The gel-like silicon compound in the mixed liquid D was pulverized by the pulverization treatment, and hence the mixed liquid D was turned into a sol liquid E of the pulverized products. A volume-average particle diameter representing a variation in particle size of the pulverized products in the sol liquid E was determined to be from 0.50 to 0.70 with a dynamic light scattering-type nanotrack particle size analyzer (manufactured by Nikkiso Co., Ltd., UPA-EX150). Further, a methyl ethyl ketone (MEK) solution of a photobase generator (Wako Pure Chemical Industries, Ltd.: product name: WPBG-266) having a concentration of 1.5 wt% and a MEK solution of bis(trimethoxysilyl)ethane having a concentration of 5% were added at ratios of 0.062 g and 0.036 g, respectively to 0.75 g of the sol liquid E. Thus, a coating liquid for forming a porous layer was obtained.

### [Production Example 2] Preparation of Pressure-sensitive Adhesive for forming First Pressure-sensitive Adhesive Layer

90.7 Parts of butyl acrylate, 6 parts of N-acryloylmorpholine, 3 parts of acrylic acid, 0.3 part of 2-hydroxybutyl acrylate, and 0.1 part of 2,2'-azobisisobutyronitrile serving as a polymerization initiator were loaded into a four-necked flask including a stirring blade, a temperature gauge, a nitrogen gas-introducing tube, and a condenser together with 100 g of ethyl acetate, and a nitrogen gas was introduced to purge the flask with nitrogen while the mixture was gently stirred. After that, a liquid temperature in the flask was kept at around 55°C, and a polymerization reaction was performed for 8 hours to prepare an acrylic polymer solution. 0.2 Part of an isocyanate cross-linking agent (CORONATE L manufactured by Nippon Polyurethane Industry Co., Ltd., tolylene diisocyanate adduct of trimethylolpropane), 0.3 part of benzoyl peroxide (NYPER BMT manufactured by Nippon Oil & Fats Co., Ltd.), and 0.2 part of γ-glycidoxypropylmethoxysilane (manufactured by Shin-Etsu Chemical Co., Ltd.: KBM-403) were blended into 100 parts of the solid content of the resultant acrylic polymer solution to prepare an acrylic pressure-sensitive adhesive solution. Next, the acrylic pressure-sensitive adhesive solution was applied to one surface of a silicone-treated polyethylene terephthalate (PET) film (manufactured by Mitsubishi Chemical Polyester Film Co., Ltd., thickness: 38 µm) so that the thickness of a pressure-sensitive adhesive layer after drying became 20 µm, followed by drying at 150°C for 3 minutes. Thus, the pressure-sensitive adhesive layer was formed. The resultant pressure-sensitive adhesive layer had a storage modulus of elasticity of 1.3×10⁵ (Pa) .

### [Production Example 3] Preparation of Pressure-sensitive Adhesive for forming Second Pressure-sensitive Adhesive Layer

99 Parts of butyl acrylate, 1 part of 4-hydroxybutyl acrylate, and 0.1 part of 2,2'-azobisisobutyronitrile serving as a polymerization initiator were loaded into a four-necked flask including a stirring blade, a temperature gauge, a nitrogen gas-introducing tube, and a condenser together with 100 parts of ethyl acetate, and a nitrogen gas was introduced to purge the flask with nitrogen while the mixture was gently stirred. After that, a liquid temperature in the flask was kept at around 55°C, and a polymerization reaction was performed for 8 hours to prepare an acrylic polymer solution. 0.1 Part of an isocyanate cross-linking agent (TAKENATE D110N manufactured by Mitsui Takeda Chemicals Inc., trimethylolpropane xylylene diisocyanate), 0.1 part of benzoyl peroxide (NYPER BMT manufactured by Nippon Oil & Fats Co., Ltd.), and 0.2 part of γ-glycidoxypropylmethoxysilane (manufactured by Shin-Etsu Chemical Co., Ltd.: KBM-403) were blended into 100 parts of the solid content of the resultant acrylic polymer solution to prepare an acrylic pressure-sensitive adhesive composition solution. Next, the acrylic pressure-sensitive adhesive composition solution was applied to one surface of a polyethylene terephthalate film treated with a silicone-based releasing agent (separator film: manufactured by Mitsubishi Chemical Polyester Film Co., Ltd., MRF 38), and was dried at 150°C for 3 minutes to form a pressure-sensitive adhesive layer having a thickness of 20 um on the surface of the separator film. The resultant pressure-sensitive adhesive layer had a storage modulus of elasticity of 8.2×10⁴ (Pa) .

### [Example 1]

A transparent reflection-type hologram film (manufactured by HOLOGRAM SUPPLY Co., Ltd., "SP-3T") having an uneven shape and a wavy cross section was used as the optical functional layer. The height of the unevenness of "SP-3T" was 350 nm. The coating liquid for forming a porous layer prepared in Production Example 1 was applied to an uneven surface of the hologram film. A coating film was dried through treatment at a temperature of 100°C for 1 minute to form a porous layer (thickness: 30 nm) on the hologram film (optical functional layer). The resultant porous layer had a porosity of 60% and a refractive index of 1.15. Next, a first pressure-sensitive adhesive layer (thickness: 10 um) formed of the pressure-sensitive adhesive prepared in Production Example 2 was formed on the surface of the porous layer, and a second pressure-sensitive adhesive layer (thickness: 28 um) formed of the pressure-sensitive adhesive prepared in Production Example 3 was further formed on the surface of the optical functional layer. In this way, a laminated film having the configuration "first pressure-sensitive adhesive layer/porous layer/optical functional layer/second pressure-sensitive adhesive layer" was produced. The resultant laminated film was subjected to the evaluations (2) to (5) described above. The results are shown in Table 1.

### [Example 2]

A laminated film was produced in the same manner as in Example 1 except that the thickness of the porous layer was set to 800 nm. The resultant laminated film was subjected to the same evaluations as those of Example 1. The results are shown in Table 1.

### [Example 3]

A laminated film was produced in the same manner as in Example 1 except that the thickness of the porous layer was set to 800 nm and the refractive index of the porous layer was set to 1.20. The resultant laminated film was subjected to the same evaluations as those of Example 1. The results are shown in Table 1. The refractive index of the porous layer was adjusted by adjusting the amounts of bis(trimethoxysilyl)ethane and the photobase generator in the coating liquid for forming a porous layer of Production Example 1.

### [Example 4]

A laminated film was produced in the same manner as in Example 1 except that the thickness of the porous layer was set to 5 um (5,000 nm) and the refractive index of the porous layer was set to 1.20. The resultant laminated film was subjected to the same evaluations as those of Example 1. The results are shown in Table 1. The refractive index of the porous layer was adjusted by adjusting the amounts of bis(trimethoxysilyl)ethane and the photobase generator in the coating liquid for forming a porous layer of Production Example 1.

### [Example 5]

A laminated film was produced in the same manner as in Example 1 except that the thickness of the porous layer was set to 800 um and the refractive index of the porous layer was set to 1.30. The resultant laminated film was subjected to the same evaluations as those of Example 1. The results are shown in Table 1. The refractive index of the porous layer was adjusted by adjusting the amounts of bis(trimethoxysilyl)ethane and the photobase generator in the coating liquid for forming a porous layer of Production Example 1.

### [Example 6]

A laminated film was produced in the same manner as in Example 3 except that a transparent reflection-type hologram film (manufactured by SCIVAX Corporation, "FCLS/200-4×4") having an uneven surface of a stripe pattern in plan view (line-and-space pattern) was used as the optical functional layer instead of "SP-3T". The height of the unevenness of "FCLS" was 200 nm. The resultant laminated film was subjected to the same evaluations as those of Example 1. The results are shown in Table 1.

### [Example 7]

A laminated film was produced in the same manner as in Example 3 except that a transparent reflection-type hologram film (manufactured by SCIVAX Corporation, "FTLS/1000/2000/2000-100×100") having an uneven surface of a stripe pattern in plan view (line-and-space pattern) was used as the optical functional layer instead of "SP-3T". The height of the unevenness of "FTLS" was 2 um (2,000 nm). The resultant laminated film was subjected to the same evaluations as those of Example 1. The results are shown in Table 1.

### [Example 8]

A laminated film was produced in the same manner as in Example 3 except that a microlens array film (manufactured by Grapac Japan Co., Inc., "HALS") was used as the optical functional layer instead of "SP-3T". The height of the unevenness of the microlens array film was 10 um (10,000 nm) . The resultant laminated film was subjected to the same evaluations as those of Example 1. The results are shown in Table 1.

### [Example 9]

A laminated film was produced in the same manner as in Example 3 except that a prism film was used as the optical functional layer instead of "SP-3T". The height of the unevenness of the prism film was 10 um (10,000 nm). The resultant laminated film was subjected to the same evaluations as those of Example 1. The results are shown in Table 1.

### [Comparative Example 1]

A laminated film having the configuration "first pressure-sensitive adhesive layer (only in end portions)/optical functional layer/second pressure-sensitive adhesive layer" was produced in the same manner as in Example 1 except that the first pressure-sensitive adhesive layer was directly formed on both end portions of the uneven surface of the optical functional layer. In the resultant laminated film, an air layer (pore portion) was formed in an upper portion of the uneven surface of the optical functional layer. The resultant laminated film was subjected to the same evaluations as those of Example 1. The results are shown in Table 1.

### [Comparative Example 2]

A laminated film was produced in the same manner as in Example 1 except that the thickness of the porous layer was set to 700 nm and the refractive index of the porous layer was set to 1.10. The resultant laminated film was subjected to the same evaluations as those of Example 1. The results are shown in Table 1. The refractive index of the porous layer was adjusted by adjusting the amounts of bis(trimethoxysilyl)ethane and the photobase generator in the coating liquid for forming a porous layer of Production Example 1.

### [Comparative Example 3]

A laminated film was produced in the same manner as in Example 1 except that a ZrO₂ layer (refractive index: 2.05, thickness: 50 nm) was formed through sputtering instead of the porous layer. The resultant laminated film was subjected to the same evaluations as those of Example 1. The results are shown in Table 1.

### [Comparative Example 4]

A laminated film was produced in the same manner as in Example 1 except that a SiO₂ layer (refractive index: 1.47, thickness: 50 nm) was formed through sputtering instead of the porous layer. The resultant laminated film was subjected to the same evaluations as those of Example 1. The results are shown in Table 1.

### [Comparative Example 5]

A laminated film having the configuration "transparent resin film/water/optical functional layer/second pressure-sensitive adhesive layer" was produced in the same manner as in Example 1 except that a transparent resin film was laminated on the uneven surface of the optical functional layer under a state in which the surface was wetted with water. The resultant laminated film was subjected to the same evaluations as those of Example 1. The results are shown in Table 1.

### [Comparative Example 6]

A laminated film having the configuration "first pressure-sensitive adhesive layer/optical functional layer/second pressure-sensitive adhesive layer" was produced in the same manner as in Example 1 except that the first pressure-sensitive adhesive layer was directly formed on the uneven surface of the optical functional layer. The resultant laminated film was subjected to the same evaluations as those of Example 1. The results are shown in Table 1.

**Table 1**

| | Porous layer | | | Optical functional layer | | Peel test | Fixing property | Change in visibility by angle | ΔY |
|---|---|---|---|---|---|---|---|---|---|
| | Presence | Refractive index | Thickness (nm) | Kind | Height of unevenness (nm) | | | | |
| Example 1 | Present | 1.15 | 30 | Hologram film | 350 | 1.0 | ○ | ○ Interference color change | o -1.0 |
| Example 2 | Present | 1.15 | 800 | Hologram film | 350 | 0.5 | ○ | ○ Interference color change | o -1.0 |
| Example 3 | Present | 1.20 | 800 | Hologram film | 350 | 2.5 | ○ | ○ Interference color change | o -1.5 |
| Example 4 | Present | 1.20 | 5,000 | Hologram film | 350 | 2.5 | ○ | ○ Interference color change | o -1.5 |
| Example 5 | Present | 1.30 | 800 | Hologram film | 350 | 4.0 | ○ | ○ Interference color change | o -1.0 |
| Example 6 | Present | 1.20 | 800 | Hologram film | 200 | 1.9 | ○ | ○ Interference color change | o -1.5 |
| Example 7 | Present | 1.20 | 800 | Hologram film | 2,000 | 1.9 | ○ | ○ Interference color change | o -1.5 |
| Example 8 | Present | 1.20 | 800 | Microlens array film | 10,000 | 2.5 | ○ | ○ Image change | o -1.5 |
| Example 9 | Present | 1.20 | 800 | Prism film | 10,000 | 2.5 | ○ | ○ Image change | o -1.5 |
| Comparative Example 1 | Absent (end portions fixed) | 1.00 | - | | - | - | × | Δ Interference color at fixed portion disappeared | - |
| Comparative Example 2 | Present | 1.10 | 700 | Hologram film | 350 | Breakage of porous layer | ○ | ○ | o -1.5 |
| Comparative Example 3 | Absent (ZrO₂ layer) | 2.05 | 50 | Hologram film | 350 | 6.0 | ○ | ○ | × 3.0 |
| Comparative Example 4 | Absent (SiO₂ layer) | 1.47 | 50 | Hologram film | 350 | 6.0 | ○ | × | o -0.3 |
| Comparative Example 5 | Absent (water) | 1.30 | - | Hologram film | 350 | - | × | ○ | - |
| Comparative Example 6 | Absent (pressure-sensitive adhesive directly formed) | 1.47 | - | Hologram film | 350 | 6.0 | ○ | × | - |

As is apparent from Table 1, according to the examples of the present invention, the function of changing a direction of light of the optical functional layer can be sufficiently exhibited, and the transparency of the laminated film as a whole can be ensured. In particular, even when the optical functional layer is a hologram film, the function of the optical functional layer can be satisfactorily expressed without arrangement of a metal layer (reflective layer). Further, according to Examples of the present invention, because the adhesive strength between the optical functional layer and the porous layer is large, the integrity as a laminated film is satisfactory.

### Industrial Applicability

The laminated film according to the embodiment of the present invention can be suitably used as a decorative film.

### Reference Signs List

- **10**: optical functional layer

- **10a**: first main surface
- **10b**: second main surface
- **20**: porous layer
- **30**: first pressure-sensitive adhesive layer
- **40**: second pressure-sensitive adhesive layer
- **100**: laminated film

## Claims

1. A laminated film, comprising:
an optical functional layer having a first main surface and a second main surface, the first main surface having an uneven structure and having a height of unevenness of from 10 nm to 100 um;
a porous layer arranged on the first main surface of the optical functional layer; and
a pressure-sensitive adhesive layer arranged on the porous layer on a side opposite to the optical functional layer,
wherein the optical functional layer comprises a reflection-type hologram film, a microlens array film, or a prism film, and
wherein the porous layer has a refractive index of from 1.15 to 1.30.

2. The laminated film according to claim 1, wherein the porous layer contains a silicon compound.

3. The laminated film according to claim 1 or 2, wherein the porous layer has a porosity of from 20 vol% to 60 vol%.

4. The laminated film according to any one of claims 1 to 3, wherein the porous layer has a thickness of from 30 nm to 5 um.

5. The laminated film according to any one of claims 1 to 4, wherein the porous layer is formed of one or a plurality of kinds of constituent units each forming a fine pore structure, and the constituent units are chemically bonded to each other through a catalytic action.

6. The laminated film according to claim 5, wherein the constituent unit of the porous layer is a constituent unit having at least one shape selected from the group consisting of: a particle shape; a fiber shape; a rod shape; and a flat plate shape.

7. The laminated film according to claim 5 or 6, wherein bonding between the constituent units of the porous layer includes a hydrogen bond or a covalent bond.

8. The laminated film according to any one of claims 1 to 7, wherein the porous layer is directly formed on the first main surface of the optical functional layer.
